# EUROPEAN PATENT APPLICATION

(11) **EP 4 667 624 A1**
(43) Date of publication of application: **24.12.2025**
(21) Application number: 24778801.1
(22) Date of filing: 15.02.2024
(51) Int. Cl.: C25B 11/056, C25B 9/00, C25B 9/23, C25B 11/052, C25B 13/08

(54) **ELECTRODE CATALYST LAYER AND MEMBRANE ELECTRODE ASSEMBLY**

(30) Priority: 28.03.2023 JP 2023051806; 28.03.2023 JP 2023051737
(71) Applicant: Toppan Holdings Inc., Tokyo 110-0016 (JP)
(72) Inventor: MORIOKA, Hiroyuki, Tokyo 110-0016 (JP)
(74) Representative: Schmidbauer, Andreas Konrad
(86) International application number: PCT/JP2024/005335
(87) International publication number: WO 2024/202656

(57) **Abstract**

An electrode catalyst layer 2 includes catalyst particles 12, an ionomer 13, and ionomer-adsorptive carbon fibers 14α. The ionomer-adsorptive carbon fibers 14α may have an adsorption amount of the ionomer of 10 mg or more per 1 g of the ionomer-adsorptive carbon fibers, may have a diameter in a range of 50 nm or more and 1 µm or less, and may be vapor-grown carbon fibers (VGCF) subjected to hydrophilic treatment.

## Description

### Technical Field

The present disclosure relates to an electrode catalyst layer and a membrane electrode assembly suitable for a water electrolysis apparatus.

### Background Art

In recent years, efforts to utilize hydrogen as a primary energy source have been accelerating, as it is a CO₂-free energy that can be produced from various resources toward achieving carbon neutrality. As a method for producing such hydrogen, a technique for performing water electrolysis using renewable energy is regarded as promising. As methods for performing water electrolysis, alkaline water electrolysis and proton electrolyte membrane (PEM) water electrolysis are generally known. Among them, the PEM water electrolysis is attracting attention as a method capable of downsizing water electrolysis apparatuses through high-efficiency operation.

A PEM water electrolysis apparatus generally includes a pair of main electrodes and a membrane electrode assembly provided between the pair of main electrodes, in which the membrane electrode assembly includes a laminated body in which an anode-side electrode catalyst layer is provided on one surface of a proton-conductive solid polymer electrolyte membrane, and a cathode-side electrode catalyst layer is provided to sandwich the solid polymer electrolyte membrane together with the anode-side electrode catalyst layer.

When external electric power is applied to the anode-side electrode catalyst layer and the cathode-side electrode catalyst layer, an electrolysis reaction of water occurs on the catalysts in the respective electrode catalyst layers. At the anode, protons, electrons, and oxygen are generated from water, the protons move through the solid polymer electrolyte membrane, and the electrons move to the cathode through an external circuit, and hydrogen is generated at the cathode.

The membrane electrode assembly is obtained by forming an electrode catalyst layer on one side of a solid polymer electrolyte membrane using, for example, a coating method (see, for example, Patent Literature 1 below).

Alkaline water electrolysis is easy to scale up but has poor responsiveness to fluctuations, whereas PEM water electrolysis has excellent responsiveness to fluctuations but has a drawback in that it uses costly noble metal materials. Therefore, anion exchange membrane (AEM) water electrolysis is also attracting attention, as it is expected to reduce material costs while maintaining the fluctuation responsiveness inherent to PEM water electrolysis.

An AEM water electrolysis cell generally includes a pair of main electrodes and a membrane electrode assembly provided between the pair of main electrodes, the membrane electrode assembly includes a laminated body in which an anode-side electrode catalyst layer is provided on one surface of a solid polymer electrolyte membrane through which hydroxide ions are conducted, and a cathode-side electrode catalyst layer provided so as to sandwich the solid polymer electrolyte membrane together with the anode-side electrode catalyst layer.

When external electric power is applied to the anode-side electrode catalyst layer and the cathode-side electrode catalyst layer, an electrolysis reaction of water proceeds on the catalysts in the respective electrode catalyst layers, generating oxygen at the anode and hydrogen at the cathode.

The membrane electrode assembly is obtained by forming an electrode catalyst layer on one side of a solid polymer electrolyte membrane using, for example, a coating method (see, for example, Patent Literature 2 below).

### Citation List

### Patent Literature

[Patent Literature 1] Japanese Unexamined Patent Publication No. 2019-83085
[Patent Literature 2] PCT International Publication No. WO2017/159820

### Summary of Invention

### Technical Problem

However, the membrane electrode assembly described in Patent Literature 1 may develop a crack in the electrode catalyst layer and has room for improvement in terms of suppressing crack occurrence. The occurrence of a crack may hinder the movement of protons and electrons to the catalyst and may reduce the performance of water electrolysis.

In addition, the membrane electrode assembly described in Patent Literature 2 above may develop a crack in the electrode catalyst layer and has room for improvement in terms of suppressing crack occurrence. The occurrence of a crack may hinder the movement of hydroxide ions and electrons to the catalyst and may reduce the performance of water electrolysis.

The present disclosure has been made in view of the above problems, and an object thereof is to provide an electrode catalyst layer and a membrane electrode assembly suitable for a water electrolysis apparatus (water electrolysis cell), in which crack occurrence in the electrode catalyst layer can be suppressed and the performance of water electrolysis is improved.

### Solution to Problem

[A1] An electrode catalyst layer including catalyst particles, an ionomer, and ionomer-adsorptive carbon fibers capable of adsorbing the ionomer.

[A2] The electrode catalyst layer according to [A1], in which the ionomer-adsorptive carbon fibers adsorb the ionomer, and an adsorption amount of the ionomer is 10 mg or more per 1 g of the ionomer-adsorptive carbon fibers.

[A3] The electrode catalyst layer according to [A1] or [A2], in which an average fiber diameter of the ionomer-adsorptive carbon fibers is in a range of 50 nm or more and 1 µm or less.

[A4] The electrode catalyst layer according to any one of [A1] to [A3], in which the ionomer-adsorptive carbon fibers are carbon fibers subjected to hydrophilic treatment.

[A5] The electrode catalyst layer according to any one of [A1] to [A4], in which the ionomer-adsorptive carbon fibers are vapor-grown carbon fibers (VGCF) subjected to hydrophilic treatment..

[A6] The electrode catalyst layer according to any one of [A1] to [A5], which is for a water electrolysis apparatus.

[A7] The electrode catalyst layer according to any one of [A6], which is a cathode-side electrode catalyst layer.

[A8] A membrane electrode assembly including a polymer electrolyte membrane, an anode-side electrode catalyst layer; and a cathode-side electrode catalyst layer sandwiching the polymer electrolyte membrane, in which at least one of the cathode-side electrode catalyst layer and the anode-side electrode catalyst layer is the electrode catalyst layer according to any one of [A1] to [A7].

[B1] An electrode catalyst layer including catalyst particles, a polymer electrolyte having hydroxide ion conductivity, and coated fibers, in which
the coated fibers each have a fiber core and an outer peripheral coating layer that covers an outer peripheral surface of the fiber core, and
the outer peripheral coating layer contains a polymer including a Lewis acidic functional group.

[B2] The electrode catalyst layer according to [B1] or [B2], in which the coated fibers each have an intermediate coating layer between the fiber core and the outer peripheral coating layer, and
the intermediate coating layer contains a polymer compound having a Lewis basic functional group.

[B3] The electrode catalyst layer according to [B2], in which the polymer compound of the intermediate coating layer has an azole structure.

[B4] The electrode catalyst layer according to [B3], in which the polymer compound of the intermediate coating layer is polybenzoimidazole.

[B5] The electrode catalyst layer according to any one of [B1] to [B4], in which the fiber core is a conductive fiber.

[B6] The electrode catalyst layer according to [B5], in which the conductive fiber is a carbon fiber.

[B7] The electrode catalyst layer according to [B6], in which the carbon fiber is a vapor-grown carbon fiber (VGCF).

[B8] The electrode catalyst layer according to any one of [B1] to [B7], in which the average fiber diameter of the coated fibers is in the range of 0.1 to 1 µm.

[B9] The electrode catalyst layer according to any one of [B1] to [B8], which is for an anion exchange membrane water electrolysis cell.

[B10] The electrode catalyst layer according to [B9], which is a cathode-side electrode catalyst layer.

[B11] A membrane electrode assembly including a polymer electrolyte membrane, an anode-side electrode catalyst layer, and a cathode-side electrode catalyst layer sandwiching the polymer electrolyte membrane, in which
the cathode-side electrode catalyst layer is the electrode catalyst layer according to any one of [B1] to [B10].

### Advantageous Effects of Invention

According to the electrode catalyst layer and the membrane electrode assembly of an aspect of the present invention, it is possible to provide a laminate for water electrolysis cells with sufficient mechanical strength and improved water electrolysis performance using a simple method.

### Brief Description of Drawings

FIG. 1 is an exploded perspective view schematically illustrating a membrane electrode assembly having an electrode catalyst layer for a water electrolysis cell according to one embodiment of the present invention.
FIG. 2 is a schematic cross-sectional view of a cathode-side electrode catalyst layer according to one embodiment of the present invention.
FIG. 3 is a cross-sectional view along an axis of a coated fiber according to one embodiment of the present invention.
FIG. 4 is a cross-sectional view illustrating one embodiment of a water electrolysis apparatus of the present disclosure.

### Description of Embodiments

### <Embodiment A>

Hereinafter, embodiments of the present invention will be described with reference to the accompanying drawings.
Here, it should be noted that the drawings are schematic, and relationships such as the ratio of thickness to planar dimensions and the thickness ratios among layers may differ from actual conditions. The embodiments described below merely illustrate configurations for embodying the technical concept of the present invention, and the technical concept of the present invention is not limited to the materials, shapes, or structures of the components described below. The technical concept of the present invention can be modified in various ways within the technical scope defined by the claims.

### [Membrane Electrode Assembly]

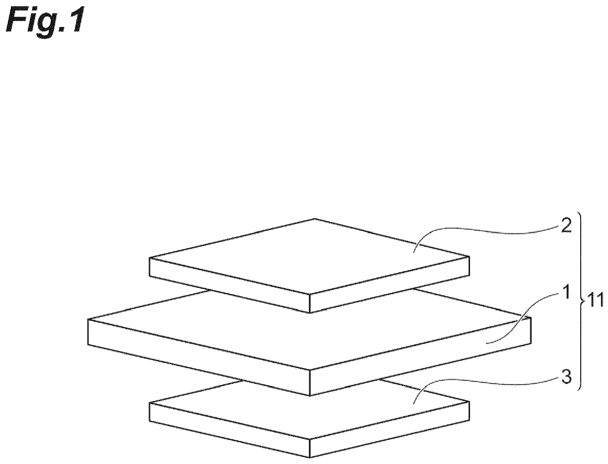

As illustrated in FIG. 1, a membrane electrode assembly 11 in the present embodiment includes a polymer electrolyte membrane 1, an anode-side electrode catalyst layer 3 (illustrated on the bottom side in FIG. 1) and a cathode-side electrode catalyst layer 2 (illustrated on the top side in FIG. 1) that sandwich the polymer electrolyte membrane 1 from its upper and lower surfaces of the polymer electrolyte membrane.

### (Cathode-side Electrode Catalyst Layer 2)

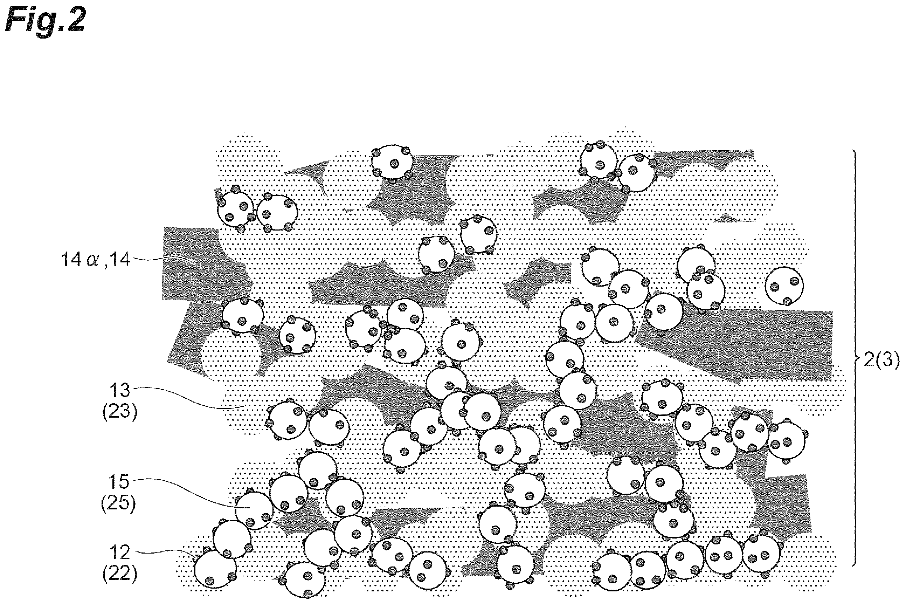

As illustrated in FIG. 2, the cathode-side electrode catalyst layer 2 includes catalyst particles 12, an ionomer (polymer electrolyte) 13, and ionomer-adsorptive carbon fibers 14α.

### (Cathode-side Catalyst Particles)

The catalyst particles 12 are in particulate form. In a case where improvement in the activity of the catalyst particles is required, it is preferable that the average particle diameter of the catalyst particles be 20 nm or less, and more preferably 5 nm or less. In a case where stabilization of the activity of the catalyst particles is required, it is preferable that the average particle diameter of the catalyst particles be 0.5 nm or more, and more preferably 1 nm or more.

The catalyst particles in the cathode-side electrode catalyst layer are catalysts for performing a reduction reaction. As materials constituting the catalyst particles, platinum group elements, a metal, alloys or oxides of such metal, and mixed oxides can be used. Examples of the platinum group elements include platinum, palladium, ruthenium, iridium, rhodium, and osmium and examples of the metals include iron, lead, copper, chromium, cobalt, nickel, manganese, vanadium, molybdenum, gallium, and aluminum. Note that the mixed oxide herein refers to an oxide composed of two types of metals.

The catalyst particles in the cathode-side electrode catalyst layer may be supported on a support 15. The support is composed of particles that have electrical conductivity and is not corroded by the catalytic substance. An example of the support is carbon particles. In a case where increase of electron conduction paths is required, it is preferable that the particle size of the support be 10 nm or more. In a case where reduction in the resistance value of the electrode catalyst layer is required, or in a case where an increase in the supported amount of catalyst particles is required, it is preferable that the particle size of the support be 1000 nm or less, and more preferably 100 nm or less.

An example of the material constituting the support is at least one selected from the group consisting of carbon black, graphite, graphite, activated carbon, and fullerene. The carbon black is at least one selected from the group consisting of acetylene black, furnace black, and Ketjen black.

### (Ionomer (Polymer Electrolyte))

The ionomer (polymer electrolyte) 13 is a polymer electrolyte having proton conductivity or hydroxide ion conductivity.

A polymer electrolyte having proton conductivity may be, for example, in a particulate form or in a form in which a plurality of particles are united. An example of the polymer electrolyte having proton conductivity is a fluoropolymer electrolyte or a hydrocarbon-based polymer electrolyte. An example of the fluoropolymer electrolyte is at least one type selected from the group consisting of Nafion (registered trademark, manufactured by DuPont de Nemours, Inc.), Flemion (registered trademark, manufactured by AGC Inc.), Aciplex (registered trademark, manufactured by Asahi Kasei Corporation.), and Gore-Select (registered trademark, manufactured by W.L.Gore & Associates G.K.). An example of the hydrocarbon-based cation exchange electrolyte is at least one selected from the group consisting of sulfonated polyether ketone, sulfonated polyether sulfone, sulfonated polyether ether sulfone, sulfonated polysulfide, and sulfonated polyphenylene.

In addition, the polymer electrolyte having hydroxide ion conductivity is not particularly limited as long as it conducts hydroxide ions. For example, fluorinated anion exchange electrolytes and hydrocarbon-based anion exchange electrolytes are included. Examples of fluorinated electrolytes include perfluorocarbon-based electrolytes, and examples of hydrocarbon-based electrolytes include styrene-based electrolytes and acrylic-based electrolytes.

### (Ionomer-adsorptive Carbon Fibers 14α)

The ionomer-adsorptive carbon fibers 14α can adsorb ionomers. The ionomer-adsorptive carbon fibers are not particularly limited, but may be carbon fibers having hydrophilicity (hydrophilic carbon fibers), and for example, hydrophilic carbon fibers produced to have hydrophilicity, or hydrophilic carbon fibers obtained by subjecting non-hydrophilic carbon fibers to a treatment for imparting hydrophilicity, can be used. Examples of treatments for imparting hydrophilicity to carbon fibers include ozone treatment, oxygen plasma treatment, electrolytic oxidation treatment, and mixed acid treatment.

The type of carbon fibers having ionomer adsorptivity is not particularly limited, and may be selected from carbon fibers such as carbon fibers, carbon nanofibers, carbon nanotubes, and carbon nanohorns. That is, the ionomer-adsorptive carbon fibers may be either solid or hollow. Among them, it is preferable that the carbon fibers are vapor-grown carbon fibers (VGCF).

It is preferable that the adsorption amount of the ionomer on the ionomer-adsorptive carbon fibers 14α is 10 mg or more per 1 g of the ionomer-adsorptive carbon fibers.

In the ionomer-adsorptive carbon fiber 14α, since the ionomer (polymer electrolyte) is adsorbed onto the surface of the carbon fibers, mechanical properties of the electrode catalyst layer are improved, such as suppression of crack generation in the electrode catalyst layer, thereby improving durability. In addition to the improvement in mechanical properties, since the ionomer (polymer electrolyte) is adsorbed onto the ionomer-adsorptive carbon fibers 14α, a conduction path for protons or hydroxide ions is formed, and high electrolysis performance is obtained.

On the other hand, in a case where the surface of the carbon fibers is not ionomer-adsorptive, adsorption of the ionomer (polymer electrolyte) is difficult. Therefore, it is presumed that the mechanical properties of the electrode catalyst layer are insufficient, making it difficult to suppress crack generation and to improve durability. It is also presumed that formation of a conduction path for protons or hydroxide ions is inhibited due to dispersion of the ionomer, making it impossible to improve electrolysis performance.

The average fiber diameter of the ionomer-adsorptive carbon fibers 14α is not particularly limited, but is preferably from 50 nm to 1 µm, and more preferably from 0.1 to 0.4 µm. In this case, the occurrence of cracks in the electrode catalyst layer is more likely to be suppressed. In addition, adhesion between the polymer electrolyte membrane and the electrode catalyst layer can also be improved. Accordingly, the occurrence of voids due to delamination between the polymer electrolyte membrane and the electrode catalyst layer can be suppressed, and an increase in the resistance of the membrane electrode assembly caused by such voids can be more effectively suppressed. In a case where the average fiber diameter of the ionomer-adsorptive carbon fibers is less than 50 nm, it is presumed that improvement in mechanical properties may be difficult. In a case where the average fiber diameter of the ionomer-adsorptive carbon fibers exceeds 1 µm, it is presumed that dispersion as an ink may be difficult.

The average fiber diameter refers to the average value of the diameters measured for the cross-sections of exposed ionomer-adsorptive carbon fibers when observing the cross-section of the electrode catalyst layer using a scanning electron microscope (SEM). In a case where the ionomer-adsorptive carbon fiber is cut obliquely with respect to its longitudinal axis, an elliptical cross-section is obtained. However, in such a case, the diameter refers to the diameter of a true circle fitted along the minor axis of the ellipse. In addition, when observing the cross-section of the electrode catalyst layer using SEM, the surface of the ionomer-adsorptive carbon fiber, rather than the cross-section thereof, may be exposed. In such a case, the diameter refers to the width of the fiber in a direction perpendicular to the longitudinal axis of the exposed ionomer-adsorptive carbon fiber. The average fiber diameter of the ionomer-adsorptive carbon fibers refers to the arithmetic average value of the fiber diameters obtained by similarly measuring at least 20 observation points.

As a method for exposing the cross-section of the electrode catalyst layer, a known method such as ion milling or ultramicrotomy can be used, for example.

The average fiber length of the ionomer-adsorptive carbon fibers is not particularly limited, but is preferably 500 nm or more, and more preferably 1 µm or more. In this case, the ionomer-adsorptive carbon fibers become entangled, form voids of an appropriate size in the electrode catalyst layer, and can improve the mechanical properties of the electrode catalyst layer. However, the average fiber length of the ionomer-adsorptive carbon fiber is preferably 100 µm or less, and more preferably 40 µm or less.

The average fiber length of the ionomer-adsorptive carbon fibers refers to the arithmetic average value of fiber lengths obtained by measuring the lengths of at least 10 ionomer-adsorptive carbon fibers. The average fiber length of the ionomer-adsorptive carbon fibers in the electrode catalyst layer can be determined by performing particle size distribution measurement using a solution in which the electrode catalyst layer is dissolved in a solvent. Specifically, the correlation between the average fiber length obtained by electron microscopy and the peak position in the particle size distribution measurement is previously identified, and based on this correlation and the peak position obtained by the particle size distribution measurement, the average fiber length of the ionomer-adsorptive carbon fibers in the electrode catalyst layer is determined.

The composition of the cathode-side electrode catalyst layer 2 is not particularly limited; however, it is possible to set the mass of the ionomer (polymer electrolyte) (solid content) to be from 0.1 to 0.4, and the mass of the ionomer-adsorptive carbon fibers to be from 0.025 to 0.25, based on a mass of 1 for the catalyst particles.

### (Anode-side Electrode Catalyst Layer 3)

As illustrated in FIG. 2, the anode-side electrode catalyst layer 3 includes catalyst particles 22 and an ionomer (polymer electrolyte) 23. When the anode-side electrode catalyst layer 3 includes ionomer-adsorptive carbon fibers 14α in the same manner as the cathode-side electrode catalyst layer 2, the mechanical properties of the electrode catalyst layer are improved, thereby enhancing durability. In addition, along with the improvement in mechanical properties, the adsorption of the polymer electrolyte onto the ionomer-adsorptive carbon fibers 14α forms a conduction path for protons or hydroxide ions, thereby achieving high electrolysis performance.

### (Catalyst Particles)

The catalyst particles 22 are in particulate form. In a case where improvement in the activity of the catalyst particles is required, it is preferable that the average particle diameter of the catalyst particles is 20 nm or less, and more preferably 5 nm or less. In a case where stabilization of the activity of the catalyst particles is required, it is preferable that the average particle diameter of the catalyst particles is 0.5 nm or more, and more preferably 1 nm or more.

The catalyst particles in the anode-side electrode catalyst layer serve as catalysts for oxidation reactions. As the constituent material of the catalyst particles, it is possible to use a metal belonging to the platinum group, a metal other than those of the platinum group, or an alloy, oxide, mixed oxide, or carbide thereof. Among these, an alloy containing at least one of ruthenium, rhodium, palladium, iridium, and platinum is particularly preferable due to its high catalytic activity. Note that the catalyst particles may be composed of only one of the above examples or a combination of two or more thereof.

The catalyst particles in the anode-side electrode catalyst layer may be supported on a support 25. The support is composed of particles that have electrical conductivity and are not corroded in an oxidizing atmosphere. An example of the support is particles of an oxide containing titanium, tin, or zirconium. In a case where an increase in electron conduction paths is required, it is preferable that the particle size of the support is 10 nm or more. In a case where reduction in the resistance value of the electrode catalyst layer is required, or in a case where an increase in the supported amount of catalyst particles is required, it is preferable that the particle size of the support is 1000 nm or less, and more preferably 100 nm or less.

### (Ionomer (Polymer Electrolyte))

The anode-side ionomer (polymer electrolyte) 23 may be the same ionomer (polymer electrolyte) as that used on the cathode side.

The composition of the anode-side electrode catalyst layer 3 is not particularly limited; however, it is possible to set the mass of the ionomer (polymer electrolyte) (solid content) to be from 0.1 to 0.4, and the mass of the ionomer-adsorptive carbon fibers to be from 0.025 to 0.25, based on a mass of 1 for the catalyst particles.

### (Polymer Electrolyte Membrane 1)

An example of the polymer electrolyte membrane 1 is a fluoropolymer electrolyte membrane or a hydrocarbon-based polymer electrolyte membrane, having proton conductivity or hydroxide ion conductivity. The polymer electrolyte membrane is not particularly limited as long as it conducts protons or hydroxide ions.

An example of the fluoropolymer electrolyte membrane having proton conductivity is at least one selected from the group consisting of Nafion (registered trademark, manufactured by DuPont de Nemours, Inc.), Flemion (registered trademark, manufactured by AGC Inc.), Aciplex (registered trademark, manufactured by Asahi Kasei Corporation.), and Gore-Select (registered trademark, manufactured by W.L.Gore & Associates G.K.). An example of a constituent material of the hydrocarbon-based polymer electrolyte membrane having proton conductivity is at least one selected from the group consisting of sulfonated polyether ketone, sulfonated polyether sulfone, sulfonated polyether ether sulfone, sulfonated polysulfide, and sulfonated polyphenylene.

An example of a fluorinated anion exchange electrolyte membrane having hydroxide ion conductivity is a perfluorocarbon-based electrolyte membrane. On the other hand, examples of hydrocarbon-based anion exchange electrolyte membranes include styrene-based electrolyte membranes and acrylic-based electrolyte membranes.

In a case where it is required to enhance the adhesion between the electrode catalyst layer and the polymer electrolyte membrane, when the constituent material of the polymer electrolyte of the electrode is a fluoropolymer electrolyte, it is preferable that the constituent material of the polymer electrolyte membrane is also a fluoropolymer electrolyte. **In** addition, when the constituent material of the polymer electrolyte of the electrode is a hydrocarbon-based polymer electrolyte, it is preferable that the constituent material of the polymer electrolyte membrane is also a hydrocarbon-based polymer electrolyte. Furthermore, it is preferable that the constituent material of the polymer electrolyte membrane is the same as the constituent material of the polymer electrolyte of the electrode.

### [Method for Manufacturing Membrane Electrode Assembly]

Next, an example of a method for manufacturing the membrane electrode assembly having the above-described configuration will be described.

The membrane electrode assembly is manufactured by a method including the following first to third processes.

The first process is a process of performing oxygen plasma treatment on carbon fibers to impart hydrophilicity to the surfaces of the carbon fibers and thereby produce ionomer-adsorptive carbon fibers.

The second process includes a process of manufacturing a cathode-side catalyst ink containing catalyst particles, an ionomer (polymer electrolyte), the ionomer-adsorptive carbon fibers obtained in the first process, and a solvent, and a process of manufacturing an anode-side catalyst ink containing catalyst particles, an ionomer (polymer electrolyte), and a solvent. In this process, the ionomer can be adsorbed onto the ionomer-adsorptive carbon fibers.

The third process is a process in which the cathode-side catalyst ink and the anode-side catalyst ink obtained in the second process are applied to the polymer electrolyte membrane and the solvent is dried, thereby forming the cathode-side electrode catalyst layer and the anode-side electrode catalyst layer on both surfaces of the polymer electrolyte membrane.

### [Detailed Description]

### (First Process)

In the first process, treatment such as oxygen plasma treatment is performed on the surface of the carbon fibers to impart hydrophilicity to the surface of the carbon fibers, thereby manufacturing ionomer-adsorptive carbon fibers. By adjusting the time for performing a hydrophilic treatment such as oxygen plasma treatment on the carbon fibers, it is possible to control the degree of hydrophilicity imparted to the surface of the carbon fibers, in other words, the degree of ionomer adsorptivity. The amount of ionomer adsorbed onto the obtained ionomer-adsorptive carbon fibers can be calculated by bringing the carbon fibers into contact with a dispersion liquid in which an ionomer of a predetermined concentration is dispersed, filtering the mixture using a predetermined filter (for example, with a pore size of 0.3 to 0.5 µm), and measuring the concentration of the ionomer contained in the filtrate.

### (Second Process)

The cathode-side catalyst ink can be manufactured by mixing catalyst particles, an ionomer (polymer electrolyte), the ionomer-adsorptive carbon fibers obtained in the first process, and a solvent. The anode-side catalyst ink can also be manufactured in the same manner.

The solvent constituting the catalyst ink does not erode the catalyst particles, the ionomer (polymer electrolyte), or the ionomer-adsorptive carbon fibers, and it dissolves or disperses the ionomer (polymer electrolyte) as a fine gel. An example of the solvent constituting the catalyst ink is at least one kind selected from the group consisting of alcohols, ketone-based solvents, ether-based solvents, and polar solvents. Examples of the alcohols include at least one kind selected from the group consisting of methanol, ethanol, 1-propanol, 2-propanol, 1-butanol, 2-butanol, isobutyl alcohol, tert-butyl alcohol, and pentanol. Examples of the ketone-based solvents include at least one kind selected from the group consisting of acetone, methyl ethyl ketone, pentanone, methyl isobutyl ketone, heptanone, cyclohexanone, methylcyclohexanone, acetonylacetone, and diisobutyl ketone. Examples of the ether-based solvents include at least one kind selected from the group consisting of tetrahydrofuran, dioxane, diethylene glycol dimethyl ether, anisole, methoxytoluene, and dibutyl ether. Examples of the polar solvents include at least one kind selected from the group consisting of dimethylformamide, dimethylacetamide, N-methylpyrrolidone, ethylene glycol, diethylene glycol, diacetone alcohol, and 1-methoxy-2-propanol. The solvent constituting the catalyst ink may also contain water, which has high affinity with the polymer electrolyte.

In a case where improvement in the dispersibility of the catalyst particles is required, it is preferable that the catalyst ink contains a dispersant. Examples of the dispersant include anionic surfactants, cationic surfactants, amphoteric surfactants, and nonionic surfactants. In a case where improvement in the dispersibility in the catalyst ink is required, it is also preferable to perform dispersion processing in the manufacture of the catalyst ink. Examples of the dispersion processing include stirring using a ball mill or a roll mill, stirring using a shear mill, stirring using a wet mill, stirring by application of ultrasonic waves, and stirring using a homogenizer.

In a case where suppression of crack occurrence on the surface of the electrode catalyst layer is required, it is preferable that the solid content in the catalyst ink is not more than 50 mass%. In a case where improvement in the film formation rate of the electrode catalyst layer is required, it is preferable that the solid content in the catalyst ink is at least 1 mass%.

### (Third Process)

An example of a method for applying the catalyst ink onto a substrate is a doctor blade method, a dipping method, a screen printing method, or a roll coating method. The substrate on which the catalyst ink is applied is a transfer sheet. An example of the constituent material of the transfer sheet is a fluoropolymer or an organic polymer compound other than a fluoropolymer. Examples of the fluoropolymer include ethylene-tetrafluoroethylene copolymer (ETFE), tetrafluoroethylene-hexafluoropropylene copolymer (FEP), tetrafluoro-perfluoroalkylvinylether copolymer (PFA), or polytetrafluoroethylene (PTFE). Examples of the organic polymer compound include polyimide, polyethylene terephthalate, polyamide, polysulfone, polyether sulfone, polyphenylene sulfide, polyether ether ketone, polyetherimide, polyarylate, and polyethylene naphthalate.

Note that, in the above embodiment, the ionomer-adsorptive carbon fiber is provided in the cathode-side electrode catalyst layer, but it is also possible to implement the invention by providing the ionomer-adsorptive carbon fiber in the anode-side electrode catalyst layer.

Hereinafter, specific examples and comparative examples of the electrode catalyst layer and the membrane electrode assembly for a water electrolysis apparatus in the present embodiment will be described; however, the present embodiment is not limited to the following examples and comparative examples.

### <Effects and Others>

According to the present embodiment, it is possible to manufacture a membrane electrode assembly for a water electrolysis apparatus, which has excellent mechanical properties of the electrode catalyst layer and exhibits superior electrolysis performance and durability, without using a complicated process.

### <Example A1>

### [Manufacture of Ionomer-Adsorptive Carbon Fiber]

Carbon fibers having an average fiber diameter of 150 nm (VGCF-H (registered trademark), manufactured by Showa Denko Co., Ltd.; vapor-grown carbon fiber) were subjected to hydrophilic treatment by oxygen plasma treatment to obtain ionomer-adsorptive carbon fibers. In a case where a fluoropolymer electrolyte (Nafion (registered trademark) dispersion) having proton conductivity was used as the ionomer, it was confirmed that the ionomer-adsorptive carbon fibers of Example A1 had an ionomer adsorption amount of not less than 10 mg per 1 g of the ionomer-adsorptive carbon fibers.

### [Manufacture of Cathode-Side Catalyst Ink]

The catalyst ink was prepared by mixing the catalyst particles and the ionomer shown below, and the ionomer-adsorptive carbon fiber in a solvent, followed by dispersion processing using a planetary ball mill for 30 minutes. The solvent for the catalyst ink was a mixed solvent of ultrapure water and 1-propanol. The volume ratio of ultrapure water to 1-propanol was set to 1:1. The catalyst ink was adjusted so that the solid content in the catalyst ink was 10 mass%.
· Catalyst particles: Pt-supported carbon particles
· Ionomer: Fluoropolymer electrolyte (Nafion (registered trademark) dispersion)
· Mixing ratio: In the catalyst ink, the mass of the ionomer (solid content) was set to 0.4 and the mass of the ionomer-adsorptive carbon fibers was set to 0.05, based on a mass of 1 for the catalyst particles.

[Manufacture of Anode-side Catalyst Ink] The catalyst ink was prepared by mixing the catalyst particles and ionomer shown below in a solvent, followed by dispersion processing using a planetary ball mill for 30 minutes. The solvent for the catalyst ink was a mixed solvent of ultrapure water and 1-propanol. The volume ratio of ultrapure water to 1-propanol was set to 1:1. The catalyst ink was adjusted so that the solid content in the catalyst ink was 10 mass%.
· Catalyst particles: Iridium oxide
· Ionomer: Fluoropolymer electrolyte (Nafion (registered trademark) dispersion)
· Mixing ratio: In the catalyst ink, the mass of the ionomer (solid content) was set to 0.2, based on a mass of 1 for the catalyst particles.

### [Preparation of Membrane Electrode Assembly]

Using a die coater, a rectangular coating film having dimensions of 50 mm in length × 50 mm in width was formed by applying the prepared cathode-side catalyst ink onto one surface of a polymer electrolyte membrane having proton conductivity (fluoropolymer electrolyte membrane). The coating amount of the cathode-side catalyst ink was adjusted such that the catalyst amount became 0.5 mg/cm². Then, drying processing was performed using an oven, and the cathode-side electrode catalyst layer was formed by evaporating the dispersion medium contained in the coating film.

Next, by applying the prepared anode-side catalyst ink to the surface opposite to the surface on which the cathode-side electrode catalyst layer was formed in the polymer electrolyte membrane, a rectangular coating film of 50 mm in length × 50 mm in width was formed. The coating amount of the anode-side catalyst ink was set to an amount such that the catalyst was 0.5 mg/cm². Then, drying processing was performed using an oven, and the membrane electrode assembly was obtained by forming the anode-side electrode catalyst layer by evaporation of the dispersion medium contained in the coating film.

Both electrode catalyst layers of Example A1 had no cracks and did not peel off from the polymer electrolyte membrane.

### <Example A2>

Except that carbon fibers having an average fiber diameter of 0.8 µm were used as the carbon fibers in the ionomer-adsorptive carbon fibers, a membrane electrode assembly of Example A2 was obtained in the same manner as in Example A1. In a case where the fluoropolymer electrolyte (Nafion (registered trademark) dispersion) having proton conductivity was used as the ionomer having proton conductivity, it was confirmed that the ionomer-adsorptive carbon fibers of Example A2 had an ionomer adsorption amount of 10 mg or more per 1 g of the ionomer-adsorptive carbon fibers.

Both electrode catalyst layers of Example A2 had no cracks and did not peel off from the polymer electrolyte membrane.

### <Example A3>

### [Manufacture of Ionomer-Adsorptive Carbon Fiber]

Carbon fibers having an average fiber diameter of 150 nm (VGCF-H (registered trademark), manufactured by Showa Denko Co., Ltd.; vapor-grown carbon fiber) were subjected to hydrophilic treatment by oxygen plasma treatment to obtain ionomer-adsorptive carbon fibers. In a case where the hydrocarbon-based anion exchange electrolyte was used as the ionomer having hydroxide ion conductivity, it was confirmed that the ionomer-adsorptive carbon fibers of Example A3 had an ionomer adsorption amount of 10 mg or more per 1 g of the ionomer-adsorptive carbon fibers.

### [Manufacture of Cathode-Side Catalyst Ink]

The catalyst ink was prepared by mixing the catalyst particles and the ionomer shown below, and the ionomer-adsorptive carbon fiber in a solvent, followed by dispersion processing using a planetary ball mill for 30 minutes. The solvent for the catalyst ink was a mixed solvent of ultrapure water and 1-propanol. The volume ratio of ultrapure water to 1-propanol was set to 1:1. The catalyst ink was adjusted so that the solid content in the catalyst ink was 10 mass%.
· Catalyst particles: Pt-supported carbon particles
· Ionomer: Hydrocarbon-based anion exchange electrolyte
· Mixing ratio: In the catalyst ink, the mass of the ionomer (solid content) was set to 0.3 and the mass of the ionomer-adsorptive carbon fibers was set to 0.05, based on a mass of 1 for the catalyst particles.

### [Manufacture of Anode-side Catalyst Ink]

The catalyst ink was prepared by mixing the catalyst particles and ionomer shown below in a solvent, followed by dispersion processing using a planetary ball mill for 30 minutes. The solvent for the catalyst ink was a mixed solvent of ultrapure water and 1-propanol. The volume ratio of ultrapure water to 1-propanol was set to 1:1. The catalyst ink was adjusted so that the solid content in the catalyst ink was 10 mass%.
· Catalyst particles: Iridium oxide
· Ionomer: Hydrocarbon-based anion exchange electrolyte
· Mixing ratio: In the catalyst ink, the mass of the ionomer (solid content) was set to 0.3, based on a mass of 1 for the catalyst particles.

### [Preparation of Membrane Electrode Assembly]

Using a die coater, a rectangular coating film having dimensions of 50 mm in length × 50 mm in width was formed by applying the prepared cathode-side catalyst ink onto one surface of a polymer electrolyte membrane having hydroxide ion conductivity (hydrocarbon-based anion exchange electrolyte membrane). The coating amount of the cathode-side catalyst ink was adjusted such that the catalyst amount became 0.5 mg/cm². Then, drying processing was performed using an oven, and the cathode-side electrode catalyst layer was formed by evaporating the dispersion medium contained in the coating film.

Next, by applying the prepared anode-side catalyst ink to the surface opposite to the surface on which the cathode-side electrode catalyst layer was formed in the polymer electrolyte membrane, a rectangular coating film of 50 mm in length × 50 mm in width was formed. The coating amount of the anode-side catalyst ink was set to an amount such that the catalyst was 0.5 mg/cm². Then, drying processing was performed using an oven, and the membrane electrode assembly was obtained by forming the anode-side electrode catalyst layer by evaporating the dispersion medium contained in the coating film.

Both electrode catalyst layers of Example A3 had no cracks and did not peel off from the polymer electrolyte membrane.

### <Example A4>

Except that carbon fibers having an average fiber diameter of 0.8 µm was used as the carbon fibers in the ionomer-adsorptive carbon fibers, a membrane electrode assembly of Example A4 was obtained in the same manner as in Example A3. In a case where the hydrocarbon-based anion exchange electrolyte was used as the ionomer having hydroxide ion conductivity, it was confirmed that the ionomer-adsorptive carbon fibers of Example A4 had an ionomer adsorption amount of 10 mg or more per 1 g of the ionomer-adsorptive carbon fibers.

Both electrode catalyst layers of Example A4 had no cracks and did not peel off from the polymer electrolyte membrane.

### <Comparative Example A1>

Except that carbon fibers having an average fiber diameter of 150 nm (VGCF-H (registered trademark), manufactured by Showa Denko Co.,Ltd.; vapor-grown carbon fiber) were used without being subjected to hydrophilic treatment instead of the ionomer-adsorptive carbon fibers, a membrane electrode assembly of Comparative Example A1 was obtained in the same manner as in Example A1. In a case where the fluoropolymer electrolyte (Nafion (registered trademark) dispersion) was used as the ionomer having proton conductivity, it was confirmed that the carbon fibers of Comparative Example A1 had an ionomer adsorption amount of less than 10 mg per 1 g of the carbon fibers.

In the formation of the cathode-side electrode catalyst layer of Comparative Example A1, no cracks were observed, and no delamination from the polymer electrolyte membrane occurred; however, during the formation of the anode-side electrode catalyst layer, cracks occurred in the cathode-side electrode catalyst layer, and partial delamination from the polymer electrolyte membrane was observed.

### <Comparative Example A2>

Except that carbon fibers having an average fiber diameter of 0.8 µm were used without being subjected to hydrophilic treatment instead of the ionomer-adsorptive carbon fibers, a membrane electrode assembly of Comparative Example A2 was obtained in the same manner as in Example A2. In a case where the fluoropolymer electrolyte (Nafion (registered trademark) dispersion) was used as the ionomer having proton conductivity, it was confirmed that the carbon fibers of Comparative Example A2 had an ionomer adsorption amount of less than 10 mg per 1 g of the carbon fibers.

In the formation of the cathode-side electrode catalyst layer of Comparative Example A2, no cracks were observed, and no delamination from the polymer electrolyte membrane occurred; however, during the formation of the anode-side electrode catalyst layer, cracks occurred in the cathode-side electrode catalyst layer, and partial delamination from the polymer electrolyte membrane was observed.

### <Comparative Example A3>

Except that ionomer-adsorptive carbon fibers were not used, the membrane electrode assembly of Comparative Example A3 was prepared using the same procedure as in Example A1.

Significant cracks occurred during the formation of the cathode-side electrode catalyst layer of Comparative Example A3, and notable delamination from the polymer electrolyte membrane was also observed. Accordingly, the anode-side catalyst ink could not be applied.

### <Comparative Example A4>

Except that carbon fibers having an average fiber diameter of 150 nm (VGCF-H (registered trademark), manufactured by Showa Denko Co., Ltd.; vapor-grown carbon fiber) were used without being subjected to hydrophilic treatment instead of the ionomer-adsorptive carbon fibers, a membrane electrode assembly of Comparative Example A4 was obtained in the same manner as in Example A3. In the case where a hydrocarbon-based anion exchange electrolyte was used as the ionomer having hydroxide ion conductivity, it was confirmed that the adsorption amount of the ionomer on the carbon fibers in Comparative Example A4 was less than 10 mg per 1 g of the carbon fibers.

In the formation of the cathode-side electrode catalyst layer of Comparative Example A4, no cracks were observed, and no delamination from the polymer electrolyte membrane occurred; however, during the formation of the anode-side electrode catalyst layer, cracks occurred in the cathode-side electrode catalyst layer, and partial delamination from the polymer electrolyte membrane was observed.

### <Comparative Example A5>

Except that carbon fibers having an average fiber diameter of 0.8 µm were used without being subjected to hydrophilic treatment instead of the ionomer-adsorptive carbon fibers, a membrane electrode assembly of Comparative Example A5 was obtained in the same manner as in Example A4. In the case where a hydrocarbon-based anion exchange electrolyte was used as the ionomer having hydroxide ion conductivity, it was confirmed that the adsorption amount of the ionomer on the carbon fibers in Comparative Example A5 was less than 10 mg per 1 g of the carbon fibers.

In the formation of the cathode-side electrode catalyst layer of Comparative Example A5, no cracks were observed, and no delamination from the polymer electrolyte membrane occurred; however, during the formation of the anode-side electrode catalyst layer, cracks occurred in the cathode-side electrode catalyst layer, and partial delamination from the polymer electrolyte membrane was observed.

### <Comparative Example A6>

Except that ionomer-adsorptive carbon fibers were not used, the membrane electrode assembly of Comparative Example A6 was prepared using the same procedure as in Example A3.

Significant cracks occurred during the formation of the cathode-side electrode catalyst layer of Comparative Example A6, and notable delamination from the polymer electrolyte membrane was also observed. Accordingly, the anode-side catalyst ink could not be applied.

As a result of immersing each of the membrane electrode assemblies obtained in Examples A1 to A4, Comparative Examples A1 and A2, and Comparative Examples A4 and A5 in water, it was found that both electrode catalyst layers in Examples A1 and A2 were not peeled from the polymer electrolyte membrane, whereas the cathode-side electrode catalyst layers in Comparative Examples A1 and A2 and Comparative Examples A4 and A5 were peeled from the polymer electrolyte membrane. In addition, as a result of evaluating the water electrolysis performance using each membrane electrode assembly, the membrane electrode assemblies obtained in Examples A1 and A2 exhibited favorable electrolysis performance, whereas the membrane electrode assemblies obtained in Comparative Examples A1, A2, A4, and A5 showed a significant decrease in electrolysis performance upon repeated electrolysis. Based on the results of electrolysis performance of the membrane electrode assemblies prepared in the examples and the comparative examples, it was confirmed that the membrane electrode assemblies prepared in the examples had sufficient adhesion strength between the cathode-side electrode catalyst layer and the electrolyte membrane, and favorable electrolysis performance was obtained.

### <Embodiment B>

Hereinafter, embodiments of the present invention will be described with reference to the accompanying drawings.
Here, it should be noted that the drawings are schematic, and relationships such as the ratio of thickness to planar dimensions and the thickness ratios among layers may differ from actual conditions. The embodiments described below merely illustrate configurations for embodying the technical concept of the present invention, and the technical concept of the present invention is not limited to the materials, shapes, or structures of the components described below. The technical concept of the present invention can be modified in various ways within the technical scope defined by the claims.

### [Membrane Electrode Assembly]

As illustrated in FIG. 1, a membrane electrode assembly 11 in the present embodiment includes a polymer electrolyte membrane 1, an anode-side electrode catalyst layer 3 (illustrated on the top side in FIG. 1) and a cathode-side electrode catalyst layer 2 (illustrated on the bottom side in FIG. 1) that sandwich the polymer electrolyte membrane 1 from its upper and lower surfaces of the polymer electrolyte membrane.

### (Cathode-side Electrode Catalyst Layer 2)

As illustrated in FIG. 2, the cathode-side electrode catalyst layer 2 includes the catalyst particles 12, the polymer electrolyte 13, and coated fibers 14.

### (Catalyst Particles)

The catalyst particles 12 are in particulate form. In a case where improvement in the activity of the catalyst particles is required, it is preferable that the average particle diameter of the catalyst particles is 20 nm or less, and more preferably 5 nm or less. In a case where stabilization of the activity of the catalyst particles is required, it is preferable that the average particle diameter of the catalyst particles is 0.5 nm or more, and more preferably 1 nm or more.

The catalyst particles in the cathode-side electrode catalyst layer are catalysts for performing a reduction reaction. As materials constituting the catalyst particles, platinum group elements, a metal, alloys or oxides of such metal, and mixed oxides can be used. Examples of the platinum group elements include platinum, palladium, ruthenium, iridium, rhodium, and osmium and examples of the metals include iron, lead, copper, chromium, cobalt, nickel, manganese, vanadium, molybdenum, gallium, and aluminum. Note that the mixed oxide herein refers to an oxide composed of two types of metals.

The catalyst particles in the cathode-side electrode catalyst layer may be supported on a support 15. The support is composed of particles that have electrical conductivity and are not corroded by the catalytic substance. An example of the support is carbon particles. In a case where an increase in electron conduction paths is required, it is preferable that the particle size of the support is 10 nm or more. In a case where reduction in the resistance value of the electrode catalyst layer is required, or in a case where an increase in the supported amount of catalyst particles is required, it is preferable that the particle size of the support is 1000 nm or less, and more preferably 100 nm or less.

An example of the material constituting the support is at least one selected from the group consisting of carbon black, graphite, graphite, activated carbon, and fullerene. The carbon black is at least one selected from the group consisting of acetylene black, furnace black, and Ketjen black.

### (Polymer Electrolyte)

The polymer electrolyte 13 is a polymer electrolyte having hydroxide ion conductivity and is a so-called anion exchange membrane. The polymer electrolyte is not particularly limited as long as it conducts hydroxide ions. For example, fluorinated anion exchange electrolytes and hydrocarbon-based anion exchange electrolytes are included. Examples of fluorinated electrolytes include perfluorocarbon-based electrolytes, and examples of hydrocarbon-based electrolytes include styrene-based electrolytes and acrylic-based electrolytes.

### (Coated Fibers 14)

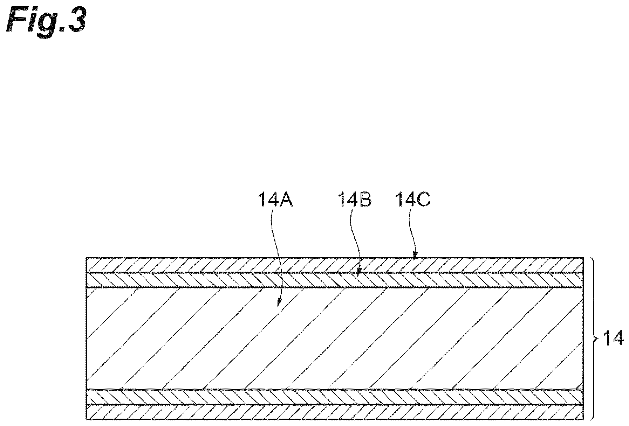

As illustrated in FIG. 3, the coated fiber 14 includes a fiber core 14A and an outer peripheral coating layer 14C that covers the outer peripheral surface of the fiber core 14A. It is preferable that an intermediate coating layer 14B is provided between the fiber core 14A and the outer peripheral coating layer 14C.

### (Fiber Core 14A)

The fiber core 14A is not particularly limited and may be a nonconductive fiber, but is preferably a conductive fiber. Examples of nonconductive fibers include polymer fibers obtained by electrospinning and cellulose nanofibers. Examples of conductive fibers include carbon fibers such as carbon fibers, carbon nanotubes, and carbon nanohorns, as well as conductive polymer nanofibers. That is, the fiber core may be either solid or hollow.

Among the conductive fiber cores, it is preferable that the fiber core 14A is a carbon fiber, and more preferably, a vapor-grown carbon fiber (VGCF).

The average fiber diameter of the fiber cores may be from 45 nm to 0.8 µm. The average fiber diameter of the fiber cores can be measured in the same manner as the average fiber diameter of the coated fibers.

### (Outer Peripheral Coating Layer 14C)

The outer peripheral coating layer 14C contains a polymer containing a Lewis acidic functional group in its molecular structure.

The Lewis acidic functional group refers to a functional group capable of accepting an electron pair. The Lewis acidic functional group may be a functional group capable of donating a proton. Examples of Lewis acidic functional groups include -SO₃H and -COOH. An example of a polymer containing a Lewis acidic functional group is a cation exchange electrolyte having proton conductivity. An example of the fluorinated cation exchange electrolyte is at least one type selected from the group consisting of Nafion (registered trademark, manufactured by DuPont de Nemours, Inc.), Flemion (registered trademark, manufactured by AGC Inc.), Aciplex (registered trademark, manufactured by Asahi Kasei Corporation.), and Gore-Select (registered trademark, manufactured by W.L.Gore & Associates G.K.). An example of the hydrocarbon-based cation exchange electrolyte is at least one selected from the group consisting of sulfonated polyether ketone, sulfonated polyether sulfone, sulfonated polyether ether sulfone, sulfonated polysulfide, and sulfonated polyphenylene.

When the outer peripheral coating layer 14C contains a polymer containing the Lewis acidic functional group in its molecular structure, the polymer electrolyte with conductivity of hydroxide ions is adsorbed on the polymer with Lewis acidic functional groups (outer peripheral coating layer). As a result, the occurrence of cracks in the electrode catalyst layer can be suppressed, and the durability can be improved due to the enhanced mechanical properties of the electrode catalyst layer. In addition, along with the improvement in mechanical properties, the adsorption of a polymer electrolyte having hydroxide ion conductivity onto the coated fiber 14 forms a conduction path for hydroxide ions, thereby achieving high electrolysis performance. In other words, rather than directly adsorbing a polymer electrolyte having hydroxide ion conductivity onto the fiber core 14A, the use of the outer peripheral coating layer 14C containing a polymer having Lewis acidic functional groups enables the polymer electrolyte having hydroxide ion conductivity to be strongly adsorbed onto the coated fiber 14.

On the other hand, in a case where the outer peripheral coating layer 14C containing a polymer having Lewis acidic functional groups is not used, it is presumed that the mechanical properties of the electrode catalyst layer are insufficient, making it difficult to suppress the occurrence of cracks and to improve durability. In addition, since the polymer electrolyte having hydroxide ion conductivity is dispersed, it is presumed that the formation of hydroxide ion conduction paths is hindered, making it difficult to improve the electrolysis performance.

The outer peripheral coating layer 14C preferably contains, as a main component, a polymer containing a Lewis acidic functional group. The main component refers to a component accounting for 50 mass% or more. The mass ratio of the polymer containing a Lewis acidic functional group in the outer peripheral coating layer 14C may be 70 mass%, 80 mass%, or 90 mass%.

The thickness of the outer peripheral coating layer 14C is not particularly limited, but may be, for example, approximately 20 to 100 nm.

### (Intermediate Coating Layer 14B)

The intermediate coating layer 14B contains a polymer containing a Lewis basic functional group in its molecular structure. A Lewis basic functional group refers to a functional group capable of donating an electron pair. Examples of the Lewis basic functional groups include imide structures and/or azole structures. An example of a polymer having an imide structure is a polyimide such as an aromatic polyimide. An example of an azole structure is a benzoazole structure, and examples of the benzoazole structure include a benzoimidazole structure, a benzoxazole structure, and a benzothiazole structure. Examples of such polymers include polybenzimidazole, polybenzoxazole, and polybenzothiazole.

Polybenzimidazole has, in its molecular structure, both a basic site that exhibits interaction with the polymer (outer peripheral coating layer) containing the Lewis acidic functional group included in the outer peripheral coating layer 14C, and a benzene ring site that exhibits interaction with the carbon of the fiber core 14A. Therefore, it is one of suitable polymers for coating carbon fibers. That is, by providing an intermediate coating layer 14B between the fiber core 14A, which is a carbon fiber, and the outer peripheral coating layer 14C, adhesion between the fiber core 14A, which is a carbon fiber, and the intermediate coating layer 14B is improved. In addition, since the outer peripheral coating layer 14C containing a polymer having a Lewis acidic functional group is provided on the intermediate coating layer 14B containing a polymer having a Lewis basic functional group, adhesion between the intermediate coating layer 14B and the outer peripheral coating layer 14C is also improved.

As a result, the polymer electrolyte having hydroxide ion conductivity can be strongly adsorbed onto the coated fiber 14.

The intermediate coating layer 14B preferably contains, as a main component, a polymer having a Lewis basic functional group. The main component refers to a component accounting for 50 mass% or more. The mass ratio of the polymer having a Lewis basic functional group in the intermediate coating layer 14B may be 70 mass%, 80 mass%, or 90 mass%.

The intermediate coating layer 14B preferably contains polybenzimidazole as a main component. The main component refers to a component accounting for 50 mass% or more. The mass ratio of polybenzimidazole may be 70 mass%, 80 mass%, or 90 mass%.

Polybenzimidazole is not particularly limited as long as it contains a benzimidazole structure in its repeating units.

The thickness of the intermediate coating layer 14B is not particularly limited and may be, for example, about 1 to 5 nm.

### (Mechanism of Action)

The present inventors have confirmed that the electrode catalyst layer having the above-described configuration exhibits excellent mechanical properties and also demonstrates high electrolysis performance. It is to be noted that although the detailed mechanism is presumed as described below, the present invention is not limited to the following mechanism.

In the coated fibers 14, since the polymer electrolyte having hydroxide ion conductivity is adsorbed onto the polymer having Lewis acidic functional groups in the outer peripheral coating layer 14C, the generation of cracks in the electrode catalyst layer is suppressed, thereby improving the mechanical properties of the electrode catalyst layer and enhancing its durability. In addition, along with the improvement in mechanical properties, the adsorption of the polymer electrolyte having hydroxide ion conductivity onto the coated fiber 14 results in the formation of a conduction path for hydroxide ions, thereby achieving high electrolysis performance.

On the other hand, in a case where a polymer having Lewis acidic functional groups is not used in the outer peripheral coating layer 14C, it is presumed that the mechanical properties of the electrode catalyst layer are insufficient, making it difficult to suppress the occurrence of cracks and to improve durability. In addition, since the polymer electrolyte having hydroxide ion conductivity is dispersed, it is presumed that the formation of hydroxide ion conduction paths is inhibited, and the electrolysis performance cannot be improved.

In the coated fibers 14, by providing an intermediate coating layer 14B between the fiber core 14A and the outer peripheral coating layer 14C, a polymer containing Lewis acidic functional groups included in the outer peripheral coating layer 14C is adsorbed onto a polymer containing Lewis basic functional groups included in the intermediate coating layer 14B. Therefore, the adhesion of the outer peripheral coating layer 14C is improved, leading to a further improvement in durability. In addition, by using a polymer having polybenzimidazole as a main component in the intermediate coating layer 14B, the adhesion between the carbon fiber of the fiber core 14A and the outer peripheral coating layer 14C is improved, resulting in further enhancement in durability.

In addition, when the fiber core 14A of the coated fiber 14 is a vapor-grown carbon fiber (VGCF), it is presumed that a tree-ring-like structure, in which carbon planes are concentrically stacked, is more likely to be formed, and affinity with the intermediate coating layer 14B is also likely to be enhanced.

The average fiber diameter of the coated fibers 14 is not particularly limited, but is preferably from 50 nm to 1 µm and more preferably from 0.1 to 0.4 µm. In this case, the occurrence of cracks in the electrode catalyst layer is more likely to be suppressed. In addition, adhesion between the polymer electrolyte membrane and the electrode catalyst layer can also be improved. Accordingly, the occurrence of voids due to delamination between the polymer electrolyte membrane and the electrode catalyst layer can be suppressed, and an increase in the resistance of the membrane electrode assembly caused by such voids can be more effectively suppressed. In a case where the average fiber diameter of the coated fibers is less than 50 nm, it is presumed that the mechanical properties may not be easily improved. In a case where the average fiber diameter of the coated fibers exceeds 1 µm, it is presumed that dispersion as an ink may not be possible.

The average fiber diameter refers to the average value of the diameters measured for the cross-sections of exposed coated fibers when observing the cross-section of the electrode catalyst layer using a scanning electron microscope (SEM). In a case where the coated fiber is cut obliquely with respect to its longitudinal axis, an elliptical cross-section is obtained. However, in such a case, the diameter refers to the diameter of a true circle fitted along the minor axis of the ellipse. When observing a cross section of the electrode catalyst layer using an SEM, the surface of the coated fiber may be exposed instead of the cross section of the coated fiber. In such a case, the diameter refers to the width of the fiber in a direction perpendicular to the longitudinal axis of the exposed coated fiber. The average fiber diameter of the coated fiber refers to the arithmetic average value of the fiber diameters obtained by similarly measuring at no less than 20 observation points.

As a method for exposing a cross section of the electrode catalyst layer, a known method such as ion milling or ultramicrotomy may be used, for example.

The average fiber length of the coated fibers is not particularly limited, but is preferably 500 nm or more, and more preferably 1 µm or more. In this case, the coated fibers become entangled, forming pores of an appropriate size within the electrode catalyst layer and improving the mechanical properties of the electrode catalyst layer. However, the average fiber length of the coated fibers is preferably 100 µm or less, and more preferably 40 µm or less.

The average fiber length of the coated fibers refers to the arithmetic mean of the fiber lengths obtained by measuring the lengths of at least 10 coated fibers. The average fiber length of the coated fibers within the electrode catalyst layer can be determined by performing particle size distribution measurement using a solution obtained by dissolving the electrode catalyst layer in a solvent. Specifically, the correlation between the average fiber length determined by electron microscopy and the peak position in the particle size distribution measurement is previously identified, and based on this correlation and the peak position obtained by the particle size distribution measurement, the average fiber length of the coated fibers within the electrode catalyst layer can be determined.

The composition of the cathode-side electrode catalyst layer 2 is not particularly limited; however, the mass of the polymer electrolyte (solid content) may be set to 0.1 to 0.4, and the mass of the coated fibers may be set to 0.025 to 0.25, based on a mass of 1 for the catalyst particles.

### (Anode-side Electrode Catalyst Layer 3)

As illustrated in FIG. 2, the anode-side electrode catalyst layer 3 includes catalyst particles 22 and a polymer electrolyte 23. In a case where the anode-side electrode catalyst layer 3 includes the coated fibers 14 similarly to the cathode-side electrode catalyst layer 2, the mechanical properties of the electrode catalyst layer are improved, resulting in enhanced durability. In addition, along with the improvement in mechanical properties, a conductive path for hydroxide ions is formed by the adsorption of a polymer electrolyte having hydroxide ion conductivity onto the coated fibers 14, thereby achieving high electrolysis performance.

### (Catalyst Particles)

The catalyst particles 22 are in particulate form. In a case where improvement in the activity of the catalyst particles is required, it is preferable that the average particle diameter of the catalyst particles is 20 nm or less, and more preferably 5 nm or less. In a case where stabilization of the activity of the catalyst particles is required, it is preferable that the average particle diameter of the catalyst particles is 0.5 nm or more, and more preferably 1 nm or more.

The catalyst particles in the anode-side electrode catalyst layer serve as catalysts for oxidation reactions. As the constituent material of the catalyst particles, it is possible to use a metal belonging to the platinum group, a metal other than those of the platinum group, or an alloy, oxide, mixed oxide, or carbide thereof. Among these, an alloy containing at least one of ruthenium, rhodium, palladium, iridium, and platinum is particularly preferable due to its high catalytic activity. Note that the catalyst particles may be composed of only one of the above examples or a combination of two or more thereof.

The catalyst particles in the anode-side electrode catalyst layer may be supported on a support 25. The support is composed of particles that have electrical conductivity and are not corroded in an oxidizing atmosphere. An example of the support is particles of an oxide containing titanium, tin, or zirconium. In a case where an increase in electron conduction paths is required, it is preferable that the particle size of the support is 10 nm or more. In a case where reduction in the resistance value of the electrode catalyst layer is required, or in a case where an increase in the supported amount of catalyst particles is required, it is preferable that the particle size of the support is 1000 nm or less, and more preferably 100 nm or less.

### (Anode-side Polymer Electrolyte)

The polymer electrolyte 23 may be the same hydroxide ion-conductive polymer electrolyte as that used in the cathode-side electrode catalyst layer.

### (Polymer Electrolyte Membrane 1)

One example of the polymer electrolyte membrane 1 is a polymer electrolyte membrane having hydroxide ion conductivity, a so-called anion exchange resin membrane. The polymer electrolyte membrane is not particularly limited, provided that it is capable of conducting hydroxide ions. For example, fluorinated anion exchange electrolyte membranes and hydrocarbon-based anion exchange electrolyte membranes may be used. Examples of fluorinated electrolyte membranes include perfluorocarbon-based electrolyte membranes, while examples of hydrocarbon-based electrolyte membranes include styrene-based electrolyte membranes and acrylic-based electrolyte membranes.

In a case where enhanced adhesion between the electrode catalyst layer and the polymer electrolyte membrane is required, and the polymer electrolyte used in the electrode catalyst layer is composed of a fluoropolymer electrolyte, it is preferable that the polymer electrolyte membrane is also composed of a fluoropolymer electrolyte. In addition, in a case where the polymer electrolyte in the electrode catalyst layer is composed of a hydrocarbon-based polymer electrolyte, it is preferable that the polymer electrolyte membrane is also composed of a hydrocarbon-based polymer electrolyte. Furthermore, it is preferable that the constituent material of the polymer electrolyte membrane is the same as that of the polymer electrolyte in the electrode catalyst layer.

### [Method for Manufacturing Membrane Electrode Assembly]

Next, an example of a method for manufacturing the membrane electrode assembly having the above-described configuration will be described.

The membrane electrode assembly is manufactured by a method including the following first to third processes.

The first process is a process of forming a polymer containing a Lewis basic functional group, such as polybenzimidazole (intermediate coating layer), on the surface of vapor-grown carbon fibers (VGCF) or the like.

The second process is a process of coating the surface of the conductive fiber cores, which is coated with the intermediate coating layer obtained in the first process, with a polymer (outer peripheral coating layer) containing a Lewis acidic functional group to form a coated fibers.

The third process is a process of producing a cathode-side catalyst ink containing catalyst particles, a polymer electrolyte, the coated fibers obtained in the second process, and a solvent, and a process of producing an anode-side catalyst ink containing catalyst particles, a polymer electrolyte, and a solvent.

The fourth process is a process of forming an anode-side electrode catalyst layer and a cathode-side electrode catalyst layer on both surfaces of the polymer electrolyte membrane by applying the anode-side catalyst ink and the cathode-side catalyst ink obtained in the third process onto the polymer electrolyte membrane and drying the solvent.

### [Detailed Description]

### (First Process)

A polymer containing a Lewis basic functional group, such as polybenzimidazole, is dissolved or dispersed in a solvent to prepare a polymer dispersion/solution. An example of the solvent is dimethylacetamide. The fiber cores are added to the resulting polymer dispersion/solution, and ultrasonic dispersion processing is optionally performed. Thereafter, the solid content is recovered by filtration, and drying is performed, whereby an intermediate coating layer can be formed on the surface of the fiber cores.

### (Second Process)

A polymer containing a Lewis basic functional group, such as a cation exchange electrolyte, is dissolved or dispersed in a solvent to prepare a polymer dispersion/solution. An example of the solvent is an alcohol. The conductive fiber cores coated with the intermediate coating layer obtained in the first process are added to the resulting polymer dispersion/solution, and ultrasonic dispersion processing is optionally performed. Thereafter, the solid content is recovered by filtration, and drying is performed, whereby an outer peripheral coating layer can be formed on the surface of the intermediate coating layer.

### (Third Process)

The solvent constituting the catalyst ink does not erode the catalyst particles, the polymer electrolyte, or the coated fibers, and dissolves or disperses the polymer electrolyte as a fine gel. An example of the solvent constituting the catalyst ink is at least one selected from the group consisting of alcohols, ketone-based solvents, ether-based solvents, and polar solvents. An example of the alcohols is at least one selected from the group consisting of methanol, ethanol, 1-propanol, 2-propanol, 1-butanol, 2-butanol, isobutyl alcohol, tert-butyl alcohol, and pentanol. An example of the ketone-based solvents is at least one selected from the group consisting of acetone, methyl ethyl ketone, pentanone, methyl isobutyl ketone, heptanone, cyclohexanone, methylcyclohexanone, acetonylacetone, and diisobutyl ketone. An example of the ether-based solvents is at least one selected from the group consisting of tetrahydrofuran, dioxane, diethylene glycol dimethyl ether, anisole, methoxytoluene, and dibutyl ether. An example of the polar solvents is at least one selected from the group consisting of dimethylformamide, dimethylacetamide, N-methylpyrrolidone, ethylene glycol, diethylene glycol, diacetone alcohol, and 1-methoxy-2-propanol. The solvent constituting the catalyst ink may contain water having high affinity for the polymer electrolyte.

In a case where improved dispersibility of the catalyst particles is required, it is preferable that the catalyst ink contains a dispersant. An example of the dispersant is an anionic surfactant, a cationic surfactant, an amphoteric surfactant, or a nonionic surfactant. In a case where improved dispersibility in the catalyst ink is required, it is preferable to perform dispersion processing in the manufacture of the catalyst ink. An example of the dispersion processing is stirring using a ball mill or a roll mill, stirring using a shear mill, stirring using a wet mill, stirring by applying ultrasonic waves, or stirring using a homogenizer.

In a case where suppression of crack generation on the surface of the electrode catalyst layer is required, it is preferable that the solid content in the catalyst ink is not more than 50 mass%. In a case where improvement of the film formation rate of the electrode catalyst layer is required, it is preferable that the solid content in the catalyst ink is at least 1 mass%.

### (Fourth Process)

An example of a method for applying the catalyst ink onto a substrate is a doctor blade method, a dipping method, a screen printing method, or a roll coating method. The substrate on which the catalyst ink is applied is a transfer sheet. An example of the constituent material of the transfer sheet is a fluoropolymer or an organic polymer compound other than a fluoropolymer. Examples of the fluoropolymer include ethylene-tetrafluoroethylene copolymer (ETFE), tetrafluoroethylene-hexafluoropropylene copolymer (FEP), tetrafluoro-perfluoroalkylvinylether copolymer (PFA), or polytetrafluoroethylene (PTFE). Examples of the organic polymer compound include polyimide, polyethylene terephthalate, polyamide, polysulfone, polyether sulfone, polyphenylene sulfide, polyether ether ketone, polyetherimide, polyarylate, and polyethylene naphthalate.

Note that, in the above embodiment, the coated fibers are provided in the cathode-side electrode catalyst layer, but it may alternatively be provided in the anode-side electrode catalyst layer.

Hereinafter, specific examples and comparative examples of the electrode catalyst layer and the membrane electrode assembly for a water electrolysis apparatus in the present embodiment will be described; however, the present embodiment is not limited to the following examples and comparative examples.

### <Effects and Others>

According to the present embodiment, it is possible to manufacture a membrane electrode assembly for a water electrolysis apparatus, which has excellent mechanical properties of the electrode catalyst layer and exhibits superior electrolysis performance and durability, without using a complicated process.

### <Example B1>

### [Manufacture of Coated Fiber]

A polybenzimidazole represented by the following formula was dissolved in dimethylacetamide to prepare a polybenzimidazole dispersion. Next, carbon fibers having an average fiber diameter of 0.15 µm (VGCF-H (registered trademark), Showa Denko Co., Ltd.: vapor-grown carbon fiber) were added to the polybenzimidazole dispersion, and ultrasonic dispersion processing was performed. Thereafter, filtration and drying were carried out to obtain polybenzimidazole-coated carbon fibers. The thickness of the polybenzimidazole coating layer was as thin as several nanometers, and the average fiber diameter of the obtained polybenzimidazole-coated carbon fibers was substantially identical to that of the core fiber.

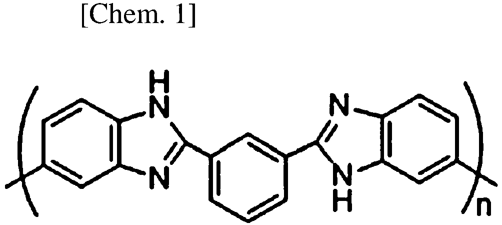

A fluoropolymer electrolyte (Nafion (registered trademark) dispersion), as a cation exchange electrolyte, was dissolved in a mixed solvent of ultrapure water and 1-propanol to prepare a fluoropolymer electrolyte dispersion. The volume ratio of ultrapure water to 1-propanol was set to 1:1. The solid content in the dispersion was adjusted to 1 mass%. Next, the polybenzimidazole-coated carbon fibers were added to the fluoropolymer electrolyte dispersion, and ultrasonic dispersion processing was performed. Thereafter, filtration and drying were carried out to obtain coated fibers in which the carbon fiber served as a conductive fiber core, the polybenzimidazole served as an intermediate coating layer, and the fluoropolymer electrolyte served as an outer peripheral coating layer. The average fiber diameter of the obtained coated fibers was approximately 0.25 µm.

### [Manufacture of Anode-side Catalyst Ink]

The catalyst ink was prepared by mixing the catalyst particles and the polymer electrolyte shown below in a solvent, followed by dispersion processing using a planetary ball mill for 30 minutes. The solvent for the catalyst ink was a mixed solvent of ultrapure water and 1-propanol. The volume ratio of ultrapure water to 1-propanol was set to 1:1. The catalyst ink was adjusted so that the solid content in the catalyst ink was 10 mass%.
· Catalyst particles: Iridium oxide
· Polymer electrolyte: Hydrocarbon-based anion exchange electrolyte
· Mixing ratio: In the catalyst ink, the mass of the polymer electrolyte (solid content) was set to 0.2, based on a mass of 1 for the catalyst particles.

### [Manufacture of Cathode-Side Catalyst Ink]

The catalyst ink was prepared by mixing the catalyst particles and the polymer electrolyte shown below, and the coated fibers in a solvent, followed by dispersion processing using a planetary ball mill for 30 minutes. The solvent for the catalyst ink was a mixed solvent of ultrapure water and 1-propanol. The volume ratio of ultrapure water to 1-propanol was set to 1:1. The catalyst ink was adjusted so that the solid content in the catalyst ink was 10 mass%.
· Catalyst particles: Pt-supported carbon particles
· Ionomer: Hydrocarbon-based anion exchange electrolyte
· Mixing ratio: In the catalyst ink, the mass of the polymer electrolyte (solid content) was set to 0.3 and the mass of the coated fibers was set to 0.05, based on a mass of 1 for the catalyst particles.

### [Preparation of Membrane Electrode Assembly]

Using a die coater, a rectangular coating film having dimensions of 50 mm in length × 50 mm in width was formed by applying the prepared cathode-side catalyst ink onto one surface of a polymer electrolyte membrane (hydrocarbon-based anion exchange electrolyte membrane). The coating amount of the cathode-side catalyst ink was adjusted such that the catalyst amount became 0.5 mg/cm². Then, drying processing was performed using an oven at 60°C, and the cathode-side electrode catalyst layer was formed by evaporating the dispersion medium contained in the coating film.

Next, by applying the prepared anode-side catalyst ink to the surface opposite to the surface on which the cathode-side electrode catalyst layer was formed in the polymer electrolyte membrane, a rectangular coating film of 50 mm in length × 50 mm in width was formed. The coating amount of the anode-side catalyst ink was set to an amount such that the catalyst was 0.5 mg/cm². Then, drying processing was performed using an oven at 60°C, and the membrane electrode assembly was obtained by forming the anode-side electrode catalyst layer by evaporation of the dispersion medium contained in the coating film. Both electrode catalyst layers of Example B1 had no cracks and did not peel off from the polymer electrolyte membrane.

### <Example B2>

Except that carbon fibers having an average fiber diameter of 0.8 µm were used as the fiber core in the coated fiber, a membrane electrode assembly of Example B2 was obtained in the same manner as in Example B1. Both electrode catalyst layers of Example B2 had no cracks and did not peel off from the polymer electrolyte membrane.

### <Comparative Example B1>

Except that carbon fibers having an average fiber diameter of 0.15 µm (VGCF-H (registered trademark), manufactured by Showa Denko Co., Ltd.: vapor-grown carbon fiber) were used without coating instead of the coated fiber, a membrane electrode assembly of Comparative Example B1 was obtained in the same manner as in Example B1.

In the formation of the cathode-side electrode catalyst layer of Comparative Example B1, no cracks were observed, and no delamination from the polymer electrolyte membrane occurred; however, during the formation of the anode-side electrode catalyst layer, cracks occurred in the cathode-side electrode catalyst layer, and partial delamination from the polymer electrolyte membrane was observed.

### <Comparative Example B2>

Except that the coated fiber was not used, a membrane electrode assembly of Comparative Example B2 was obtained in the same manner as in Example B1.

Significant cracks occurred during the formation of the cathode-side electrode catalyst layer of Comparative Example B2, and notable delamination from the polymer electrolyte membrane was also observed. Accordingly, the anode-side catalyst ink could not be applied.

As a result of immersing the membrane electrode assemblies obtained in Examples B1 and B2 and Comparative Examples B1 and B2 in water, the electrode catalyst layers in both Examples B1 and B2 did not peel off from the polymer electrolyte membrane, whereas the cathode-side electrode catalyst layer in Comparative Example B1 peeled off from the polymer electrolyte membrane. Further, as a result of evaluating the water electrolysis performance using each membrane electrode assembly, the membrane electrode assemblies obtained in Examples B1 and B2 exhibited favorable electrolysis performance, whereas the membrane electrode assembly obtained in Comparative Example B1 showed a significant decrease in electrolysis performance upon repeated electrolysis. Based on the results of electrolysis performance of the membrane electrode assemblies prepared in the examples and the comparative examples, it was confirmed that the membrane electrode assemblies prepared in the examples had sufficient adhesion strength between the cathode-side electrode catalyst layer and the electrolyte membrane, and favorable electrolysis performance was obtained.

### <Water Electrolysis Apparatus>

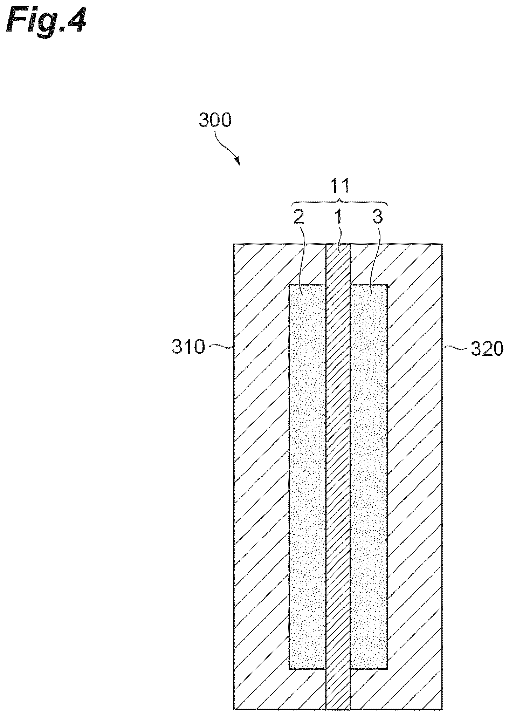

An embodiment of the water electrolysis apparatus of the present disclosure will be described with reference to FIG. 4. FIG. 4 is a cross-sectional view illustrating an embodiment of a water electrolysis apparatus 300 of the present disclosure.

As illustrated in FIG. 4, the water electrolysis apparatus 300 of the present embodiment includes a membrane electrode assembly 11, an anode-side current collector 310 and a cathode-side current collector 320 that are provided so as to sandwich the membrane electrode assembly 11, and a direct current power supply (not shown) electrically connected to the anode-side current collector 310 and the cathode-side current collector 320.

The anode-side current collector 310 is connected to a direct current power supply so as to serve as an anode, and the anode-side current collector 310 is bonded to the electrode catalyst layer 20 of the membrane electrode assembly 200. The cathode-side current collector 320 is connected to the direct current power supply so as to serve as a cathode, and cathode-side current collector 320 is bonded to the electrode catalyst layer 30 of the membrane electrode assembly 200.

The current collector may be made of any electrically conductive material. Specific examples include carbon paper, carbon nonwoven fabric, and plates of oxides or metals. Examples of the metal plate include sintered titanium bodies. The carbon paper may be subjected to water-repellent treatment, and the oxide or metal plate may be plated with a noble metal. The current collector may be a porous body and may have flow channels for supplying or discharging gas or liquid. The current collector may also function as a separator that retains liquids and gases supplied to or generated on and discharged from the cathode side and the anode side.

In the case of a water electrolysis apparatus, when water and voltage are supplied, in the case of a proton exchange membrane type, oxygen and protons are generated from water at the anode-side electrode catalyst layer, and the generated protons are converted into hydrogen at the cathode-side electrode catalyst layer, and in the case of an anion exchange membrane type, hydrogen and hydroxide ions are generated from water at the cathode-side electrode catalyst layer, and the generated hydroxide ions are converted into oxygen and water at the anode-side electrode catalyst layer. As the water, ultrapure water or the like is used.

In practice, while the embodiments of the present invention have been described in detail above, the present invention is not limited to the above embodiments, and various modifications may be made without departing from the spirit and scope of the present invention.

### Reference Signs List

1 Polymer electrolyte membrane, 2 Cathode-side electrode catalyst layer, 3 Anode-side electrode catalyst layer, 11 Membrane electrode assembly, 14α Ionomer-adsorptive carbon fiber, 14 Coated fiber.

## Claims

1. An electrode catalyst layer comprising:
catalyst particles;
an ionomer; and
ionomer-adsorptive carbon fibers capable of adsorbing the ionomer.

2. The electrode catalyst layer according to claim 1, wherein the ionomer-adsorptive carbon fibers adsorb the ionomer, and an adsorption amount of the ionomer is 10 mg or more per 1 g of the ionomer-adsorptive carbon fibers.

3. The electrode catalyst layer according to claim 1 or 2, wherein an average fiber diameter of the ionomer-adsorptive carbon fibers is in a range of 50 nm or more and 1 µm or less.

4. The electrode catalyst layer according to claim 1 or 2, wherein the ionomer-adsorptive carbon fibers are carbon fibers subjected to hydrophilic treatment.

5. The electrode catalyst layer according to claim 1 or 2, wherein the ionomer-adsorptive carbon fibers are vapor-grown carbon fibers (VGCF) subjected to hydrophilic treatment.

6. The electrode catalyst layer according to claim 1 or 2, which is for a water electrolysis apparatus.

7. The electrode catalyst layer according to claim 6, which is a cathode-side electrode catalyst layer.

8. A membrane electrode assembly comprising:
a polymer electrolyte membrane; and
an anode-side electrode catalyst layer and a cathode-side electrode catalyst layer sandwiching the polymer electrolyte membrane, wherein
at least one of the cathode-side electrode catalyst layer and the anode-side electrode catalyst layer is the electrode catalyst layer according to claim 1 or 2.

9. An electrode catalyst layer comprising:
catalyst particles;
a polymer electrolyte having hydroxide ion conductivity; and coated fibers, wherein
the coated fibers each have a fiber core and an outer peripheral coating layer that covers an outer peripheral surface of the fiber core, and
the outer peripheral coating layer contains a polymer including a Lewis acidic functional group.

10. The electrode catalyst layer according to claim 9, wherein
the coated fibers each have an intermediate coating layer between the fiber core and the outer peripheral coating layer, and
the intermediate coating layer contains a polymer compound having a Lewis basic functional group.

11. The electrode catalyst layer according to claim 10, wherein the polymer compound of the intermediate coating layer has an azole structure.

12. The electrode catalyst layer according to claim 10, wherein the polymer compound of the intermediate coating layer is polybenzoimidazole.

13. The electrode catalyst layer according to claim 9 or 10, wherein the fiber core is a conductive fiber.

14. The electrode catalyst layer according to claim 13, wherein the conductive fiber is a carbon fiber.

15. The electrode catalyst layer according to claim 14, wherein the carbon fiber is a vapor-grown carbon fiber (VGCF).

16. The electrode catalyst layer according to claim 9 or 10, wherein the average fiber diameter of the coated fibers is in the range of 50 nm to 1 µm.

17. The electrode catalyst layer according to claim 9 or 10, which is for an anion exchange membrane water electrolysis cell.

18. The electrode catalyst layer according to claim 17, which is a cathode-side electrode catalyst layer.

19. A membrane electrode assembly comprising:
a polymer electrolyte membrane; and
an anode-side electrode catalyst layer and a cathode-side electrode catalyst layer sandwiching the polymer electrolyte membrane, wherein
the cathode-side electrode catalyst layer is the electrode catalyst layer according to claim 9 or 10.
